# EUROPEAN PATENT SPECIFICATION

(11) **EP 3 232 161 B1**
(45) Date of publication and mention of the grant of the patent: **15.06.2022**
(21) Application number: 17382146.3
(22) Date of filing: 23.03.2017
(51) Int. Cl.: G01C 21/36, B60Q 3/10, B60Q 3/18

(54) **LIGHTING DEVICE AND METHOD FOR A VEHICLE INTERIOR FOR PROCESSING NAVIGATION INSTRUCTIONS**
BELEUCHTUNGSVORRICHTUNG UND -VERFAHREN FÜR EINEN FAHRZEUGINNENRAUM ZUR VERARBEITUNG VON NAVIGATIONSANWEISUNGEN
DISPOSITIF ET PROCÉDÉ D'ÉCLAIRAGE POUR UN HABITACLE DE VÉHICULE POUR LE TRAÎTEMENT D'INSTRUCTIONS DE NAVIGATION

(30) Priority: 12.04.2016 ES 201630452
(43) Date of publication of application: 18.10.2017
(73) Proprietor: Seat, S.A., 08760 Martorell (ES)
(72) Inventor: GARCÍA SÁNCHEZ, Daniel, 08760 BARCELONA (ES); CAYUELA CALVO, Jose Luis, 08760 BARCELONA (ES); GUTIÉRREZ FERNÁNDEZ, Marta, 08760 BARCELONA (ES)
(74) Representative: Elzaburu S.L.P.

(56) References cited:
- WO-A1-2015/049025
- WO-A1-2017/134106
- WO-A2-2005/082120
- DE-A1-102010 018 336
- US-A1- 2006 070 795
- US-A1- 2010 302 020
- US-A1- 2014 354 153

## Description

### OBJECT OF THE INVENTION

The object of the present patent application is a Vehicle with an interior lighting device J according to Claim 1, incorporating notable innovations and advantages.

Likewise, the object of the present patent application is also a lighting method for a vehicle interior according to Claim 7, incorporating notable innovations and advantages.

### BACKGROUND OF THE INVENTION

At the present time various lighting devices and methods for a vehicle interior are known with the object of transmitting navigation instructions.

In particular there are vehicles on the market that have various means for this purpose. For example, the map that appears on the screen of the HMI (Human Machine Interface or man machine interface). However, with said devices the vehicle user has to look away from the road somewhat, especially when the instructions are usually not easy to understand. In the same way the screen (Combi) included in the instrument panel forces the user to focus their view on a very specific point, also by looking away from the road.

Alternatively, the Head-Up Display (or image that is projected on the front windscreen itself, so that the driver does not have to look away from the road), even though representing an improvement for users to be able to keep an eye on the road while navigation instructions are projected, has the disadvantage of being very expensive. In addition, they occupy a large volume, the free space on the instrument panel area being very limited, presenting an additional complication in the package of said area.

Also known from the prior art, as reflected in the document US20130325260 , is a device that already offers a link between the interior lighting and the instructions of a driving guidance device. The lighting comes from a light emitter that is located behind the ventilation grille. Thus, the right-hand grille lights up when the driving guidance suggests a right turn, lighting up the left-hand grille when the driving guidance suggests a left turn.

Said solution presents some of the drawbacks of indirect lighting, where, in the case of there being a very intense ambient light in the environment, the user only sees the driving guidance instructions that are derived therefrom. Neither will the user be capable of discerning said indirect lighting, and therefore will not receive the driving guidance instructions, if the air vents are closed.

As reflected in the document KR20090127507 an instrument panel is also known from the prior art in which the shading and colour of at least one area of the instrument cluster panel changes through the use of LEDs, according to the speed limit sign in the region being driven through by means of the use of a GPS signal. However, the vehicle user still has to look away from the road, having to focus their attention on a specific point of the dashboard.

Also known from the prior art, as reflected in the document WO2005082120 , is a vehicle navigation system for providing improved notification of upcoming turns along a particular route. Such notifications in turn preferably involve the activation of the turn signal indicators inside or outside the vehicle in response to the turn notification signals supplied by the navigation system. However, it is aimed more at solving the problems of signalling the next turns to other vehicles than signalling to the driver of the vehicle the next guidance instructions. Moreover, the vehicle user could be confused when the same direction indicators are used as the usual turn indicators.

Also known from the prior art, as reflected in the document WO2015049025, is a combined display device on a vehicle, comprising a primary display device and at least one secondary display device, wherein for the augmented representation of at least one position-analog and/or directional-analog ancillary information, the display location of said ancillary information on the primary and/or at least one secondary display device can be selected such that a displayed position and/or a displayed direction of said ancillary information substantially corresponds to a reference position and/or to a reference direction of said ancillary information in the surroundings of the vehicle. The secondary display device includes an interior lighting device comprising at least one lighting means arranged on the instrument panel wherein at least one property of the light emitted by the at least one lighting means can be regulated according to the directional-analog ancillary information.

Also known from the prior art. as reflected in the document DE102010018336, is a system that has two illumination devices, which are formed to illuminate an inner space of a vehicle and to transfer a set of display functions as a function of multiple signals. One of the illumination devices is arranged at a dashboard, where the other illumination device is arranged at a door inside of the vehicle. The illumination devices are matched and/or mutually complemented with each other based on the signals to transfer the display functions. A control unit actuates the illumination devices with respect to the signals.

Also known from the prior art, as reflected in the document US2006070795, is a steering wheel for motor vehicles. The aim of the steering wheel is to supply information from a driver guidance system or a driver assistance system to a driver in such a way that said information is easily received and that the driver can also input information for said systems or for a telephone, without having to divert his or her attention from the traffic. To achieve this, the steering wheel is configured as a communication interface for the driver.

Thus, it is seen that there is still a need for a lighting device and method for a vehicle interior, and specifically around the area of the instrument panel or areas close to the driver, for transmitting navigation instructions to the driver of the vehicle.

### DESCRIPTION OF THE INVENTION

The present invention provides for the use of interior lighting as a complement to the GPS navigation which a vehicle may incorporate, or which is provided by an additional device (Smartphone, smartwatch). To do so, areas or specific segments of the passenger compartment are lit up, according to the type of instruction: left/right turn, traffic circle, change of direction, wrong road, etc. Each of these light signals will be associated with a colour and intensity that may vary dynamically according to whether approaching an exit, a traffic circle, or the route being recalculated after a mistake. Accordingly, an additional function is added to the interior lighting system of the vehicle. Thus, a system that currently mainly has a decorative function providing an improved interior finish, becomes one with an additional function for improving the transmission of vehicle information to the user.

More specifically, and schematically, the light signals have a polygonal shape, which may be formed by several light guides or by several LED emitters controlled by segments. One or other area of the polygon will light up according to the type of indication coming from a GPS navigator. Also the colour will be one or other according to the type of indication to be given and the correct implementation of the previous instructions. The greater or lesser proximity of the next instruction may also be shown by means of a greater or lesser light intensity, a greater or lesser speed of filling the segments that make up the polygon, or a greater or lesser flashing frequency of the light.

Navigation instruction is understood to mean the set of directions or indications issued by a navigation system in order for a user to be able to advance along a predefined route. Thus, and by way of example, a navigation instruction is a change of direction in the route followed by the user, a distance from the user to the next navigation instruction, the type of instruction (a change of direction, a roundabout, etc.).

Thus, and in more detail, the lighting device for a vehicle interior comprises at least one receiving means for receiving navigation instructions, at least one processing means, at least one lighting means in communication with the at least one processing means, wherein the at least one lighting means is visible to the driver of the vehicle and in which the at least one processing means regulates at least one property of the light emitted by the at least one lighting means according to the navigation instructions received by the at least one receiving means for receiving navigation instructions. In this way, within a simple, quick glance, without losing sight of the road, involving less added risks to driving, the driver has the information available from the navigation instructions. Furthermore, the variation in light properties, following some preset patterns, will provide the vehicle user with clear and precise information on what is going to be the next event on the road.

It is important to emphasize the need for the lighting means used for transferring navigation information to be positioned in an area visible from the driving position. This requirement is basic to being able to add a dual functionality to the lighting means. To do so, the lighting means may be arranged on the instrument panel, more specifically, they may be arranged in the periphery of the instrument panel. This point is advantageous since any lighting means arranged in the front of the instrument panel, is located in an area that is fully visible to the driver.

It should also be pointed out that the invention is implemented with a single lighting means, preferably continuous, this being understood as the means conveying the light originating from the at least one light emitter, thereby involving a simplification and a saving with respect to a device that has a plurality of lighting means, as separate entities and, therefore, without continuity.

The navigation instructions would be received, via GPS, by the receiving means, originating from the communication means and infrastructure of the vehicle itself, or from an external device, such as a Smartphone. In addition, said navigation instructions may be received through a vehicle-to-vehicle or vehicle-to-infrastructure communication. Note that the vehicle may not directly incorporate a GPS navigation system, being able to obtain the information on the route to be followed via other external means.

There is a particular advantage to using a concept of ambient lighting of the vehicle interior instead of specific and defined points of light, since ambient lighting means do not require the driver to focus attention on a specific point of light. This then means lighting a much wider area, easily perceived by the user. In addition, the association of the lit area with the instruction to be carried out will be quick and effective, improving the flow of information between the vehicle's navigation system and the driver.

According to another aspect of the invention, the at least one property of light emitted, regulated by the at least one processing means, further comprises the intensity and/or colour and/or flashing frequency of the at least one lighting means. In this way, the indication of the navigation instruction is clear and quickly visible to the vehicle user. In addition, the different instructions to be indicated to the driver are multiple, without requiring a larger number of components. It is possible to combine different properties of light for transmitting a navigation instruction in a more complete form and which contains more information, as will be seen later.

According to the invention, the direction of filling the at least one lighting means is regulated according to a direction of turn of the next navigation instruction, so that the at least one processing means fills the at least one lighting means from left to right if the next navigation instruction is a right turn and/or the at least one processing means fills the at least one lighting means from right to left if the next navigation instruction is a left turn. In this main embodiment, the navigation instruction is clearly comprehensible, even for a user not familiar with the vehicle possessing said lighting device, on having an intuitive and easily understandable meaning in associating the filling direction of the lighting means with the next direction to be taken with the vehicle. Moreover, only a single lighting means for lighting the vehicle is required, simplifying the number of components required and the complexity of the device.

In a preferred embodiment of the invention, the intensity of light emitted by the at least one lighting means is regulated according to the proximity of the vehicle to the next navigation instruction. Specifically, greater closeness to the next navigation instruction to be performed is shown by a greater intensity of light in the lighting means. In this way the navigation instruction is intuitively comprehensible, even for a user not familiar with the vehicle possessing said lighting device, since the urgency with which to carry out the next driving event is readily associable with the intensity of the light that reports same.

According to another aspect of the invention, the flashing frequency of the at least one lighting means is regulated according to the proximity of the vehicle to the next navigation instruction. Specifically, greater closeness to the next navigation instruction to be performed is shown by means of a greater flashing frequency. In this way the navigation instruction is intuitively comprehensible, even for a user not familiar with the vehicle possessing said lighting device, since the urgency with which to carry out the next driving event is readily associable with the flashing frequency of the light that reports same. The representation of the next instruction starts with a low flashing frequency, said frequency increasing as the user advances towards the instruction. Finally, the at least one lighting means may light up continuously when the instruction is imminent.

According to the invention, the filling speed of the at least one lighting means is regulated according to the proximity of the vehicle to the next navigation instruction. Specifically, greater closeness to the next navigation instruction to be performed is shown by means of a greater filling speed. In this way the navigation instruction is intuitively comprehensible, even for a user not familiar with the vehicle possessing said lighting device, since the urgency with which to carry out the next driving event is readily associable with the filling speed of the light that reports same. Filling is understood to mean that the lighting means gradually and progressively changes from an unlit state to a lit state. In this way, the greater the speed at which the lighting means changes from an 'off' state to an 'on' state, will indicate a greater closeness to the next navigation instruction to be performed. The representation of the next instruction starts with a low filling speed, said filling speed increasing as the user advances towards the instruction. Finally, the at least one lighting means may light up continuously when the instruction is imminent.

In an embodiment not part of the invention, advantageously, the at least one lighting means comprises a plurality of light segments, so that the at least one processing means selects the at least one light segment to light up according to the next navigation instruction to be performed. In this way it is possible to specifically locate the lit up strip, along the perimeter of the lighting means, in order to be able to further specify the information to be transmitted to the vehicle user. The user will be able to associate a segment in a simpler and more intuitive way, with a particular instruction, thanks to the relative position of this segment with respect to the driving position. Thus and by way of non-restrictive example, the next navigation instruction to the right of the vehicle, involves lighting up a segment located to the right of the driving position.

In an embodiment not part of the invention, the at least one lighting means comprises at least one first upper segment, at least one second lower segment joined together by at least one third right-hand segment and by at least one fourth left-hand segment. In this way the periphery of the lighting means is distributed into four areas, which, preferably, coincide with the upper frame, the lower frame, the right-hand frame and the left-hand frame of the instrument panel, in front of the driver. Thus, this periphery of the lighting means is arranged framing the steering wheel.

Advantageously, in an embodiment not part of the invention, the at least one processing means lights up the at least one third right-hand segment if the next navigation instruction is a right turn and/or lights up at least one fourth left-hand segment if the next navigation instruction is a left turn. In this way the navigation instruction is clearly comprehensible, even for a user not familiar with the vehicle possessing said lighting device, on having an intuitive and easily understandable meaning of associating the lit up area of the lighting means with the next direction to be taken with the vehicle. The lighting colour, in a preferred embodiment, is green. Thus, a segment positioned to the right or to the left of the driving position is lit up according to whether the next navigation instruction is to the right or left. It can be seen that the user will find it easy to understand, without the need to look away from the road.

In addition in an embodiment not part of the invention, the at least one processing means lights up in a first colour the at least one first upper segment, the at least one second lower segment, the at least one third right-hand segment and the at least one fourth left-hand segment if the next navigation instruction is a roundabout. In this way the navigation instruction is intuitively comprehensible, even for a user not familiar with the vehicle possessing said lighting device, since the presence of a roundabout or traffic circle in the next driving event is readily associable with the perimeter form of lighting of the whole periphery of the instrument panel. Said first colour, in a preferred embodiment, is blue.

Advantageously, in an embodiment not part of the invention, the at least one processing means lights up with a second colour the at least one first upper segment, the at least one second lower segment, the at least one third right-hand segment or the at least one fourth left-hand segment according to an exit from the roundabout established as the next navigation instruction. In this way the vehicle user is notified when they have to leave the roundabout or traffic circle via the correct turn-off. Said navigation instruction is intuitively comprehensible, even for a user not familiar with the vehicle possessing said lighting device, since the turn-off at the roundabout or traffic circle in the next driving event is readily associable with a segment. Said second colour, in a preferred embodiment, is green. In this way, the lighting means has all the segments lit up in blue, at least partially framing the steering wheel and transmitting an instruction to the user that they are to face a roundabout. In order for the user to know the exit they must take from said roundabout, a second colour is lit up in the area of the lighting means corresponding to the position of said exit from the roundabout. In this way, the perimeter of the lighting means will be lit up in blue except for an area in green, which will correspond to the exit from the roundabout.

According to another aspect not part of the invention, the at least one processing means lights up the at least one second lower segment if a navigation instruction has been disobeyed, so that a previously calculated route does not correspond to a current route of the vehicle. In this way, the vehicle user is immediately informed of their driving error. Said indication is intuitively comprehensible, even for a user not familiar with the vehicle possessing said lighting device. The lighting colour in said case that a navigation instruction has been disobeyed is, in a preferred embodiment, red, which is commonly associated with a call for attention.

In a preferred embodiment of the invention, the at least one lighting means comprises at least one light guide and at least one light emitter. In this way it is possible to substantially light the whole periphery of the instrument panel with the minimum elements: a single light emitter, and an efficient means of transmitting light, i.e. a light guide.

It is understood that, in the cases mentioned above, a navigation instruction may be transmitted to the user by means of a variation in one or more properties of the emitted light simultaneously. Thus, by way of not part of the invention example, an instruction to turn right will be displayed by means of a green flashing of the third right-hand segment of the lighting means. Therefore, the at least one processing means decides:
- to light up one of the available segments, corresponding to the type of instruction to be signalled,
- to select the colour property of the at least one lighting means that corresponds to the type of instruction, and
- to select a flashing frequency in relation to the distance that separates the user from the navigation instruction. As the vehicle approaches said right turn, the flashing frequency will increase, so that the distance that separates the vehicle from the next instruction is also transmitted.

It can be seen that with the same lighting means three different pieces of information are transmitted in relation to the next navigation instruction (direction of turn, type of instruction and distance to the instruction).

Furthermore, light properties may be combined for transmitting information more robustly. Thus, the driver may be shown the proximity of the vehicle to the next navigation instruction with the combination of a first property: the intensity, and a second property: the flashing frequency of the at least one lighting means.

Advantageously, the at least one lighting means comprises a plurality of LEDs. This provides a more uniform light distribution, making it possible to locate a light source in the proximity of each of the sections or segments to be lit.

The invention also comprises a lighting method for a vehicle interior, according to claim 7, wherein the vehicle comprises at least one receiving means for receiving navigation instructions, at least one processing means, at least one lighting means in communication with the at least one processing means, wherein the method follows the steps of receiving the navigation instructions by means of the at least one receiving means for receiving navigation instructions; processing the navigation instructions by means of the at least one processing means; regulation of at least one property of the light emitted by the at least one lighting means according to the navigation instructions received. In this way, within a simple and quick glance the driver has the information from the navigation instructions, without losing sight of the road, involving less added risks to driving. Furthermore, the variation in light properties, following some preset patterns, will provide the vehicle user with clear and precise information on what will be the next event on the road.

In addition, the lighting method for a vehicle interior comprises a step of selecting and lighting a specific section of the at least one lighting means according to the navigation instructions received, for being transmitted to the vehicle user. In this way it is possible to establish a series of easily comprehensible preset visual codes for the driver.

The attached drawings depict, by way of non-restrictive example, a lighting device and method for a vehicle interior, constituted in accordance with the invention. Other features and advantages of said lighting device and method for a vehicle interior, the object of the present invention will become apparent from the description of a preferred, but not exclusive, embodiment which is illustrated by way of non-restrictive example in the accompanying drawings in which:

### BRIEF DESCRIPTION OF THE DRAWINGS

Figure 1 .- Is an illustration example not part of the invention. It is a front view of the instrument panel of a vehicle with the lighting device for a vehicle interior, in accordance with the present invention, depicting a next navigation instruction of a right turn.
Figure 2 .- Is an illustration example not part of the invention. It is a front view of the instrument panel of a vehicle with the lighting device for a vehicle interior, in accordance with the present invention, depicting a next navigation instruction of arriving at a traffic circle.
Figure 3 .- Is an illustration example not part of the invention. It is a front view of the instrument panel of a vehicle with the lighting device for a vehicle interior, in accordance with the present invention, depicting an indication that there has been an error in following the marked route.
Figure 4 .- Is a schematic view of the lighting device for a vehicle interior, in accordance with the present invention.

### DESCRIPTION OF A PREFERRED EMBODIMENT

Looking at the aforementioned figures and according to the adopted numbering, a preferred embodiment of the invention can be seen therein which comprises the parts and elements that are indicated and described in detail below.

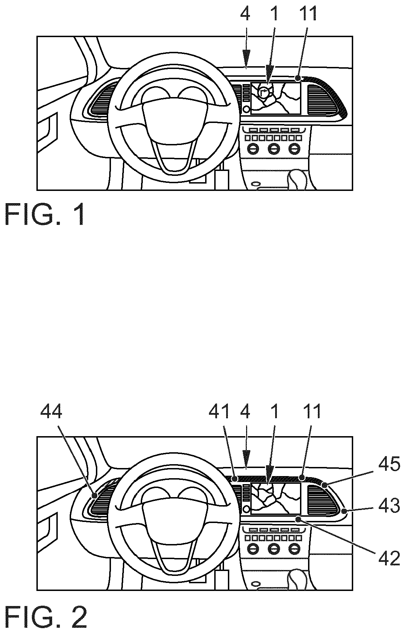

Thus, as can be seen in Figures 1, 2 , 3, and 4 , the disclosure relates to a lighting device for a vehicle interior, wherein the vehicle comprises at least one receiving means 2 for receiving navigation instructions, at least one processing means 3, at least one lighting means 4 in communication with the at least one processing means 3, wherein the at least one lighting means 4 is visible to the driver of the vehicle and in which the at least one processing means 3 regulates at least one property of the light emitted by the at least one lighting means 4 according to the navigation instructions received by the at least one receiving means 2 for receiving navigation instructions.

It is then seen that the visible position of the at least one lighting means 4 is arranged on an instrument panel 1. This position is especially favourable because the at least one lighting means 4 is positioned on a surface essentially perpendicular to the direction of advance of the vehicle, on the instrument panel 1. As a result, the driver will have a field of view directed towards the windscreen and, in particular, towards the road. Even so, the driver's peripheral vision allows the observation of the changes in the properties of the light emitted by the at least one lighting means 4, obtaining the navigation instructions without looking away from the road. More particularly, as can be seen in Figures 1, 2 and 3 , the at least one property of light emitted regulated by the at least one processing means 3, is its intensity and/or colour and/or filling speed and/or filling direction and/or flashing frequency of the at least one lighting means 4.

According to a preferred embodiment of the invention, as exemplified in Figures 1, 2 and 3 , the direction of filling of the at least one lighting means 4 is regulated according to a direction of turn of the next navigation instruction, so that the at least one processing means 3 fills the at least one lighting means 4 from left to right if the next navigation instruction is a right turn and/or the at least one processing means 3 fills the at least one lighting means 4 from right to left if the next navigation instruction is a left turn. This then concerns the main embodiment in which the lighting means 4 is an element arranged essentially in a horizontal direction, in a position visible to the user. Thus, a sequential transition can be seen in said lighting means 4 from an 'off' state to an 'on' state. According to the sequential filling direction, the user is able to intuitively understand the direction of the next navigation instruction.

In a specific embodiment, the lighting device is straight, and fills from left to right or right to left, additionally changing the intensity and speed of filling in additional embodiments, according to whether approaching the next instruction.

More specifically, as can be seen in Figures 1, 2 and 3 , the intensity of light emitted by the at least one lighting means 4 is regulated according to the proximity of the vehicle to the next navigation instruction.

In addition, as can be seen in Figures 1, 2 and 3 , the flashing frequency of the at least one lighting means 4 is regulated according to the proximity of the vehicle to the next navigation instruction.

Furthermore, as can be seen in Figures 1, 2 and 3 , the filling speed of the at least one lighting means 4 is regulated according to the proximity of the vehicle to the next navigation instruction.

According to another aspect not part of the invention, as can be seen in Figures 1, 2 and 3 , the at least one lighting means 4 comprises a plurality of light segments 45, so that the at least one processing means 3 selects the at least one light segment 45 to light up according to the next navigation instruction to be performed.

According to an embodiment not part of the invention, as can be seen in Figures 1, 2 , 3 and 4 , the at least one lighting means 4 comprises at least one first upper segment 41, at least one second lower segment 42 joined together by at least one third right-hand segment 43 and by at least one fourth left-hand segment 44.

In figures 1 to 3 it can be seen that the at least one lighting means 4 copies the periphery of the instrument panel. Said periphery, in a particular embodiment, may be open in the lower area due to the existence of the steering wheel which may lead to it not being a closed perimeter. The position of the lighting means 4 is in an area completely visible to the user, framing the steering wheel. Accordingly, they have a complete view from a driving position, assisting the user, without looking away from the road, to become aware of the next navigation instructions.

More specifically, in an embodiment not part of the invention, as can be seen in Figure 1 , the at least one processing means 3 lights up the at least one third right-hand segment 43 if the next navigation instruction is a right turn and/or lights up the at least one fourth left-hand segment 44 if the next navigation instruction is a left turn. The colour acquired by the respective third right-hand segment 43 and/or fourth left-hand segment 44 is preferably green. Furthermore, as can be seen in Figure 2 , in the embodiment not part of the invention, the at least one processing means 3 lights up with a first colour the at least one first upper segment 41, the at least one second lower segment 42, the at least one third right-hand segment 43 and the at least one fourth left-hand segment 44 if the next navigation instruction is a roundabout. Said first colour, in a preferred embodiment, is blue.

According to another aspect not part of the invention, the at least one processing means 3 lights up with a second colour the at least one first upper segment 41, the at least one second lower segment 42, the at least one third right-hand segment 43 or the at least one fourth left-hand segment 44 according to an exit from the roundabout established as the next navigation instruction. Thus, the whole periphery would be blue except for the segment indicating the exit in green, giving a clear indication to the user as to when they should leave the roundabout.

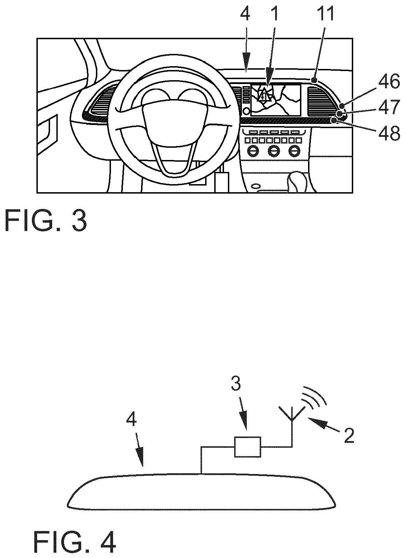

According to yet another aspect of the invention, as can be seen in Figure 3 , the at least one processing means lights up the at least one second lower segment 42 if a navigation instruction has been disobeyed, so that a previously calculated route does not correspond to a current route of the vehicle. Said second lower segment 42 would preferably be lit up in red, which is usually associated with a call for attention.

More specifically, as can be seen in Figure 3 , the at least one lighting means 4 comprises at least one light guide 46 and at least one light emitter 47.

Furthermore, as can be seen in Figure 3 , the at least one lighting means 4 comprises a plurality of LEDs 48.

The object of the invention is also a lighting method for a vehicle interior, wherein the vehicle comprises at least one receiving means 2 for receiving navigation instructions, at least one processing means 3, at least one lighting means 4 in communication with the at least one processing means 3, wherein the method follows the steps of receiving the navigation instructions by means of the at least one receiving means 2 for receiving navigation instructions; processing the navigation instructions by means of the at least one processing means 3; regulation of at least one property of the light emitted by the at least one lighting means 4 according to the navigation instructions received.

In addition, the lighting method for a vehicle interior comprises a step of selecting and lighting a specific section of the at least one lighting means 4 according to the navigation instructions received, for being transmitted to the vehicle user.

The details, shapes, dimensions and other accessory elements, as well as the components used in the implementation of the lighting device and method for a vehicle interior may be conveniently replaced by others that are technically equivalent, and do not depart from the scope defined by the appended claims.

### List of numerical references

- 1: instrument panel
- 11: periphery
- 2: receiving means
- 3: processing means
- 4: lighting means
- 41: first upper segment
- 42: second lower segment
- 43: third right-hand segment
- 44: fourth left-hand segment
- 45: light segment
- 46: light guide
- 47: light emitter
- 48: LED

## Claims

1. Vehicle with an interior lighting device, wherein the vehicle comprises at least one receiving means (2) for receiving navigation instructions, at least one processing means (3), at least one lighting means (4) in communication with the at least one processing means (3), the at least one processing means (3) being configured for regulating at least one property of the light emitted by the at least one lighting means (4) according to the navigation instructions received by the at least one receiving means (2) for receiving navigation instructions,
wherein the at least one lighting means is arranged on the instrument panel (1) of the vehicle so as to be visible
to the driver of the vehicle,
**characterized in that** the at least one lighting means (4) is implemented with a single lighting means which is arranged essentially in a horizontal direction,
wherein the direction of filling of the lighting means (4) is regulated according to a direction of turn of the next navigation instruction wherein filling means that the lighting means (4) gradually and progressively changes from an unlit state to a lit state so that the at least one processing means (3) fills the lighting means (4) from left to right if the next navigation instruction is a right turn and/or the at least one processing means (3) fills the lighting means (4) from right to left if the next navigation instruction is a left turn, and the filling speed of the lighting means (4) is regulated according to the proximity of the vehicle to the next navigation instruction.

2. Vehicle with an interior lighting device, according to Claim 1, **characterized in that** the at least one property of light emitted regulated by the at least one processing means (3) further comprises the intensity and/or colour and/or flashing frequency of the lighting means (4).

3. Vehicle with an interior lighting device, according to Claim 1 or 2, **characterized in that** the intensity of light emitted by the lighting means (4) is also regulated according to the proximity of the vehicle to the next navigation instruction.

4. Vehicle with an interior lighting device, according to Claim 1 or 2, **characterized in that** the flashing frequency of the lighting means (4) is also regulated according to the proximity of the vehicle to the next navigation instruction.

5. Vehicle with an interior lighting device, according to Claim 1, **characterized in that** the lighting means (4) comprises at least one light guide (46) and at least one light emitter (47).

6. Vehicle with an interior lighting device, according to Claim 1, **characterized in that** the lighting means (4) comprises a plurality of LEDs (48).

7. Lighting method for a vehicle interior, wherein the vehicle comprises at least one receiving means (2) for receiving navigation instructions, at least one processing means (3), lighting means (4) in communication with the at least one processing means (3), said lighting means (4) being arranged on the instrument panel and implemented with a single lighting means (4) which is arranged essentially in a horizontal direction, wherein the method follows the following steps:
- receiving the navigation instructions by means of the at least one receiving means (2) for receiving navigation instructions,
- processing the navigation instructions by means of the at least one processing means (3),
- regulating at least one property of the light emitted by the lighting means (4) according to the navigation instructions received, **characterised in that** the method further comprises:
- regulating the direction of filling of the lighting means (4) according to a direction of turn of the next navigation instruction, wherein filling means that the lighting means (4) gradually and progressively changes from an unlit state to a lit state so that the at least one processing means (3) fills the lighting means (4) from left to right if the next navigation instruction is a right turn and/or the at least one processing means (3) fills the lighting means (4) from right to left if the next navigation instruction is a left turn,
- regulating the filling speed of the lighting means (4) according to the proximity of the vehicle to the next navigation instruction.

## Patentansprüche

1. Fahrzeug mit einer Innenraumbeleuchtungsvorrichtung, wobei das Fahrzeug mindestens ein Empfangsmittel (2) zum Empfang von Navigationsanweisungen, mindestens ein Verarbeitungsmittel (3), mindestens ein Beleuchtungsmittel (4) in Kommunikation mit dem mindestens einen Verarbeitungsmittel (3) umfasst, wobei das mindestens eine Verarbeitungsmittel (3) konfiguriert ist, um mindestens eine Eigenschaft des Lichts, emittiert durch das mindestens eine Beleuchtungsmittel (4), gemäß den Navigationsanweisungen zu regulieren, die von dem mindestens einen Empfangsmittel (2) zum Empfang von Navigationsanweisungen empfangen werden,
wobei das mindestens eine Beleuchtungsmittel auf der Instrumententafel (1) des Fahrzeugs angeordnet ist, um für den Fahrer des Fahrzeugs sichtbar zu sein,
**dadurch gekennzeichnet, dass** das mindestens eine Beleuchtungsmittel (4) mit einem einzigen Beleuchtungsmittel implementiert ist, das im Wesentlichen in einer horizontalen Richtung angeordnet ist,
wobei die Füllrichtung des Beleuchtungsmittels (4) gemäß einer Drehrichtung der nächsten Navigationsanweisung reguliert ist, wobei Füllen bedeutet, dass sich das Beleuchtungsmittel (4) allmählich und fortschreitend von einem nicht beleuchteten Zustand in einen beleuchteten Zustand ändert, so dass das mindestens eine Verarbeitungsmittel (3) das Beleuchtungsmittel (4) von links nach rechts füllt, wenn die nächste Navigationsanweisung eine Rechtsdrehung ist, und/oder das mindestens ein Verarbeitungsmittel (3) das Beleuchtungsmittel (4) von rechts nach links füllt, wenn die nächste Navigationsanweisung eine Linksdrehung ist, und die Füllgeschwindigkeit des Beleuchtungsmittels (4) gemäß der Nähe des Fahrzeugs zur nächsten Navigationsanweisung reguliert ist.

2. Fahrzeug mit einer Innenraumbeleuchtungsvorrichtung nach Anspruch 1, **dadurch gekennzeichnet, dass** die mindestens eine Eigenschaft von emittiertem Licht, reguliert durch das mindestens eine Verarbeitungsmittel (3), weiter die Intensität und/oder Farbe und/oder Blinkfrequenz des Beleuchtungsmittels (4) umfasst.

3. Fahrzeug mit einer Innenraumbeleuchtungsvorrichtung nach Anspruch 1 oder 2, **dadurch gekennzeichnet, dass** die Intensität von Licht, emittiert durch das Beleuchtungsmittel (4), auch gemäß der Nähe des Fahrzeugs zur nächsten Navigationsanweisung reguliert ist.

4. Fahrzeug mit einer Innenraumbeleuchtungsvorrichtung nach Anspruch 1 oder 2, **dadurch gekennzeichnet, dass** die Blinkfrequenz des Beleuchtungsmittels (4) auch gemäß der Nähe des Fahrzeugs zur nächsten Navigationsanweisung reguliert ist.

5. Fahrzeug mit einer Innenraumbeleuchtungsvorrichtung nach Anspruch 1, **dadurch gekennzeichnet, dass** das Beleuchtungsmittel (4) mindestens eine Lichtführung (46) und mindestens einen Lichtsender (47) umfasst.

6. Fahrzeug mit einer Innenraumbeleuchtungsvorrichtung nach Anspruch 1, **dadurch gekennzeichnet, dass** das Beleuchtungsmittel (4) eine Vielzahl von LEDs (48) umfasst.

7. Beleuchtungsverfahren für einen Fahrzeuginnenraum, wobei das Fahrzeug mindestens ein Empfangsmittel (2) zum Empfang von Navigationsanweisungen, mindestens ein Verarbeitungsmittel (3), Beleuchtungsmittel (4) in Kommunikation mit dem mindestens einen Verarbeitungsmittel (3) umfasst, wobei das Beleuchtungsmittel (4) auf der Instrumententafel angeordnet mit einem einzigen Beleuchtungsmittel (4) implementiert ist, das im Wesentlichen in einer horizontalen Richtung angeordnet ist, wobei das Verfahren den folgenden Schritten folgt:
- Empfangen der Navigationsanweisungen mit Hilfe des mindestens einen Empfangsmittels (2) zum Empfang von Navigationsanweisungen,
- Verarbeiten der Navigationsanweisungen mit Hilfe des mindestens einen Verarbeitungsmittels (3),
- Regulieren der mindestens einen Eigenschaft des Lichts, emittiert durch das Beleuchtungsmittel (4), gemäß den empfangenen Navigationsanweisungen, **dadurch gekennzeichnet, dass** das Verfahren weiter Folgendes umfasst:
- Regulieren der Füllrichtung des Beleuchtungsmittels (4) gemäß einer Drehrichtung der nächsten Navigationsanweisung, wobei Füllen bedeutet, dass sich das Beleuchtungsmittel (4) allmählich und fortschreitend von einem nicht beleuchteten Zustand in einen beleuchteten Zustand ändert, so dass das mindestens eine Verarbeitungsmittel (3) das Beleuchtungsmittel (4) von links nach rechts füllt, wenn die nächste Navigationsanweisung eine Rechtsdrehung ist, und/oder das mindestens ein Verarbeitungsmittel (3) das Beleuchtungsmittel (4) von rechts nach links füllt, wenn die nächste Navigationsanweisung eine Linksdrehung ist,
- Regulieren der Füllgeschwindigkeit des Beleuchtungsmittels (4) gemäß der Nähe des Fahrzeugs zur nächsten Navigationsanweisung.

## Revendications

1. Véhicule équipé d'un dispositif d'éclairage intérieur, dans lequel le véhicule comprend au moins un moyen de réception (2) destiné à recevoir des instructions de navigation, au moins un moyen de traitement (3), au moins un moyen d'éclairage (4) en communication avec le au moins un moyen de traitement (3), le au moins un moyen de traitement (3) étant configuré pour réguler au moins une propriété de la lumière émise par le au moins un moyen d'éclairage (4) selon les instructions de navigation reçues par le au moins un moyen de réception (2) destiné à recevoir des instructions de navigation,
dans lequel le au moins un moyen d'éclairage est prévu sur le tableau de bord (1) du véhicule de façon à être visible pour le conducteur du véhicule,
**caractérisé en ce que** le au moins un moyen d'éclairage (4) est mis en œuvre avec un seul moyen d'éclairage qui est prévu essentiellement dans une direction horizontale,
dans lequel la direction de remplissage du moyen d'éclairage (4) est régulée selon une direction de virage de l'instruction de navigation suivante, dans lequel « remplissage » signifie que le moyen d'éclairage (4) passe progressivement d'un état non éclairé à un état éclairé de sorte que le au moins un moyen de traitement (3) remplisse le moyen d'éclairage (4) de la gauche vers la droite si l'instruction de navigation suivante est un virage à droite et/ou le au moins un moyen de traitement (3) remplisse le moyen d'éclairage (4) de la droite vers la gauche si l'instruction de navigation suivante est un virage à gauche, et la vitesse de remplissage du moyen d'éclairage (4) est régulée selon la proximité du véhicule par rapport à l'instruction de navigation suivante.

2. Véhicule équipé d'un dispositif d'éclairage intérieur selon la revendication 1, **caractérisé en ce que** la au moins une propriété de la lumière émise régulée par le au moins un moyen de traitement (3) comprend en outre l'intensité et/ou la couleur et/ou la fréquence de clignotement du moyen d'éclairage (4).

3. Véhicule équipé d'un dispositif d'éclairage intérieur selon la revendication 1 ou 2, **caractérisé en ce que** l'intensité de la lumière émise par le moyen d'éclairage (4) est également régulée selon la proximité du véhicule par rapport à l'instruction de navigation suivante.

4. Véhicule équipé d'un dispositif d'éclairage intérieur selon la revendication 1 ou 2, **caractérisé en ce que** la fréquence de clignotement du moyen d'éclairage (4) est également régulée selon la proximité du véhicule par rapport à l'instruction de navigation suivante.

5. Véhicule équipé d'un dispositif d'éclairage intérieur selon la revendication 1, **caractérisé en ce que** le moyen d'éclairage (4) comprend au moins un guide de lumière (46) et au moins un émetteur de lumière (47).

6. Véhicule équipé d'un dispositif d'éclairage intérieur selon la revendication 1, **caractérisé en ce que** le moyen d'éclairage (4) comprend une pluralité de LED (48).

7. Procédé d'éclairage destiné à un intérieur de véhicule, dans lequel le véhicule comprend au moins un moyen de réception (2) destiné à recevoir des instructions de navigation, au moins un moyen de traitement (3), un moyen d'éclairage (4) en communication avec le au moins un moyen de traitement (3), ledit moyen d'éclairage (4) étant prévu sur le tableau de bord et mis en œuvre avec un seul moyen d'éclairage (4) qui est prévu essentiellement dans une direction horizontale, dans lequel le procédé suit les étapes ci-dessous :
- la réception des instructions de navigation à l'aide du au moins un moyen de réception (2) destiné à recevoir des instructions de navigation,
- le traitement des instructions de navigation à l'aide du au moins un moyen de traitement (3),
- la régulation d'au moins une propriété de la lumière émise par le moyen d'éclairage (4) selon les instructions de navigation reçues,
**caractérisé en ce que** le procédé comprend en outre :
- la régulation de la direction de remplissage du moyen d'éclairage (4) selon une direction de virage de l'instruction de navigation suivante, dans lequel « remplissage » signifie que le moyen d'éclairage (4) passe progressivement d'un état non éclairé à un état éclairé de sorte que le au moins un moyen de traitement (3) remplisse le moyen d'éclairage (4) de la gauche vers la droite si l'instruction de navigation suivante est un virage à droite et/ou que le au moins un moyen de traitement (3) remplisse le moyen d'éclairage (4) de la droite vers la gauche si l'instruction de navigation suivante est un virage à gauche,
- la régulation de la vitesse de remplissage du moyen d'éclairage (4) selon la proximité du véhicule par rapport à l'instruction de navigation suivante.
